# EUROPEAN PATENT SPECIFICATION

(11) **EP 3 286 739 B1**
(45) Date of publication and mention of the grant of the patent: **28.01.2026**
(21) Application number: 16717402.8
(22) Date of filing: 21.04.2016
(51) Int. Cl.: G06T 17/10, A23G 3/02

(54) **METHOD FOR CREATING THREE DIMENSIONAL MOULD FROM TWO DIMENSIONAL IMAGE**
VERFAHREN ZUR ERZEUGUNG EINER DREIDIMENSIONALEN GUSSFORM AUS EINEM ZWEIDIMENSIONALEN BILD
PROCÉDÉ POUR CRÉER UN MOULE TRIDIMENSIONNEL À PARTIR D'UNE IMAGE BIDIMENSIONNELLE

(30) Priority: 21.04.2015 GB 201506776
(43) Date of publication of application: 28.02.2018
(73) Proprietor: Société des Produits Nestlé S.A., 1800 Vevey (CH)
(72) Inventor: MORTIMER, Ben Bryan, Harrogate Yorkshire HG2 8JY (GB); TAYLOR, Ross Aaron Fiorindo, York Yorkshire YO31 8JF (GB); REID, Alex, York Yorkshire YO30 7DW (GB); HÁJEK, Tomás, 76901 Holesov (CZ)
(74) Representative: Slaven, John William
(86) International application number: PCT/EP2016/058861
(87) International publication number: WO 2016/170035

(56) References cited:
- EP-A2- 1 669 933
- CN-A- 1 920 884
- CN-A- 101 301 161
- JP-A- 2005 018 532

## Description

### BACKGROUND

The present application relates to manufacturing food products.

There are many different types of food products, some of which (moulded food products) can be made from moulds. For example, various moulding processes are typically used to manufacture confectionery products. Fat-based confectionery products such as chocolate confectionery products (also referred to herein as chocolate products) can be produced from moulds, especially where the product is chocolate coated. Other moulding processes are typically used to manufacture confectionery products such as gummy sweets or gummy candies (hereinafter referred to as "gummies", or "gummy" or "gummi" in the singular). Preferred 'gummies' are confectionery products that exhibit at least in part a deformable, non rigid, plastic, rubber, chewable and/or gelatinous consistency. Gummies may be prepared from a composition that comprises gelling agent(s) (such as gelatine), sugar(s), flavouring(s) and/or colorant(s).

As used herein the term 'chocolate' denotes any products that meet a legal definition of chocolate in any jurisdiction and also include product in which all or part of the cocoa butter is replaced by cocoa butter equivalents (CBE) and/or cocoa butter replacers (CBR). The terms 'chocolate compound' or 'compound' as used herein (unless the context clearly indicates otherwise) denote chocolate analogues characterised by presence of cocoa solids (which include cocoa liquor/mass, cocoa butter and cocoa powder) in any amount, notwithstanding that in some jurisdictions compound may be legally defined by the presence of a minimum amount of cocoa solids. The term 'choco-material' as used herein denotes both chocolate and compound. The term 'chocolate coating' as used herein also refers to a chocolate shell and denotes coatings made from any choco-material. The term 'chocolate confectionery' as used herein denotes any foodstuff which comprises choco-material and optionally also other ingredients and thus may refer to foodstuffs such confections, cakes and/or biscuits whether the choco-material comprises a chocolate coating and/or the bulk of the product. Unless the context clearly indicates otherwise it will also be appreciated that in the present invention any one choco-material may be used to replace any other choco-material and neither the term chocolate nor compound should be considered as limiting the scope of the invention to a specific type of choco-material.

Suitable moulded food products that may be prepared by a method as described herein may be selected from the following non limiting list of: baked foodstuffs, biscuits, cakes, candies, cereals, chocolate, condiments, confectionery products, frozen food, gummies, ice cream, pizza, pasta, pellets, pet food, solid sauces, sweets, treats; wafers, combinations thereof and/or mixtures thereof; preferably from biscuits, cakes, candies, cereals, chocolate, confectionery, gummies, ice cream and/or sweets, more preferably from biscuits, candies, chocolate, confectionery products, gummies, ice cream and/or sweets, most preferably from candies, chocolate, confectionery, gummies and/or sweets; for example from gummies and/or chocolate.

Traditionally, moulds used for manufacturing such food products have been designed and created using craft techniques, such as manual sculpturing and machining. Such approaches have typically been cost-effective as the shapes of such food products has tended to remain static over longer periods of time, whereby the cost and lead time for manufacturing the moulds has been acceptable.

However, in more recent years, there has been a trend towards a greater variety of different shapes being used for food products. For example, gummies marketed as Rowntree's^{®} Randoms^{®} include gummies of different shapes. There has also been a trend to provide customised food products.

In one prior technique a new shape of mould for making gummies has been created using craft techniques including carving a new shape for a mould and then casting moulds from that shape. For example, a craftsperson has carved the three-dimensional shape for the intended gummy while taking into account the moulding process used for moulding the gummies. This process requires considerable time and relies on the knowledge and skill of the craftsperson for creating the moulds. For example, in one prior technique, the moulds are used to create indentations in powdered starch, which are then filled with the material for forming the gummy.

A process is also known (see https://www.haribo.com/enUS/consumer-information/gummies/manufacturing-process.html) where a hand drawing of an intended shape is created, the hand drawing is scanned, the scanned drawing is then edited by a designer to form a three-dimensional representation that is then used to control a milling machine to mill a plaster prototype mould for the gummy shape. This prototype mould is then used to create plaster stamps for moulding gummies in cornstarch powder. Such a process also relies on the skill of a designer in the editing process.

The characteristics of the moulding process used depend on the food product concerned.

Gummies are typically manufactured using starch powder trays. Thus, for example, the moulds used for gummies have the positive shape (positive) of the intended gummies and are pressed into starch to generate a negative shape (negative) corresponding to the intended gummies. In this case, the shape of the mould has to take account of the nature of the powdered material used and the need to be able to remove the gummy from the powder trays when the gummies have cured with as little of the starch powder as possible. In addition to starch, other powders may be used for form gummy moulds where the powders are suitable for contact with food products.

In contrast thereto, chocolate-based products are typically manufactured using rigid or semi-rigid solid moulds that are negatives of the intended shape for the resulting chocolate-based product. In this case the designers of the mould have to ensure that chocolate will reach fully into recesses in the mould without forming bubbles and that the chocolate product can be removed from the rigid or semi-rigid mould after the moulding process.

When forming a solid food product, such as a chocolate product, the designer of a shape has to consider similar issues as when designing a mould, to ensure the detail of the food shape can be held and maintained in the food material over the life of the product, For example a chocolate product when stored and handled under normal, acceptable conditions over its shelf life, the shape should be such that chocolate does not flow into crevices, edges or recesses in the shape after it has been sculpted and shaped elements are sufficiently robust to survive normal handing of the chocolate product without significant loss of detail.

US 2012/0088023 discloses (see the Abstract) a method for moulding chocolate, candy or other food materials into a moulded, edible product in a shape based upon one or more three-dimensional images of an original object that is desired to be replicated. Three-dimensional moulds are formed based upon three-dimensional image data obtained by three-dimensional scanning or processing of two-dimensional images, and three-dimensional printing of mould forms. Food safe/FDA compliant materials are used in the construction of moulds. It is described in paragraphs [0012] and [0013] that active building of a 3D geometry from a 2D reference image is performed by manually assigning depth or height of data points of the 2D image to produce a desired 3D image. As an alternative, it is suggested that a displacement mapping of the data points of the 2D image to produce a desired 3D image may be used, by displacing assigned depth or height data points over a surface of the 2D image according to values determined from apparent texture at each point on the surface of the 2D image. A greyscale or colour image can be used to produce a displacement map. However such an approach can require processing of very large digital files, and does not provide for optimisation based on the type of product to be produced.

It has been suggested (see http://www.confectionerynews.com/Processing-Packaging/3D-chocolate-molds-add-intricate-detail-Lehrmitt-Design-Studios) to produce moulds for chocolate products using Illustrator or Photoshop to create an image and then to convert the image to a three-dimensional file, that is then used to print a rigid or semi-rigid mould in food-grade silicon using a three-dimensional printer. However, such a process also requires the skilled knowledge of a designer to create appropriate moulds.

It will be appreciated that the examples given above of gummies and chocolate-based food products are merely two examples of moulded food products.

There remain technical problems to be overcome to enable more efficient generation of moulds for manufacturing different types of food products.

EP 1 669 933 A2 relates to an image processing apparatus for generating a three-dimensional model of a three-dimensional object from a two-dimensional image displaying the object, includes a three-dimensional model generator for generating, from the image, the three-dimensional model of the object displayed in the image, and an extender for extending, in a Z direction as the direction of depth, the lateral region of the three-dimensional model generated by the three-dimensional model generator.

JP 2005 018532 A discloses a three-dimensional model can be formed by a photographed person's face etc. at the surface of foodstuffs, such as chocolate.

### SUMMARY

Aspects of the claimed subject matter are defined in the appended claims.

In one aspect, a method for defining a three-dimensional shape for a food product comprises computer-implemented steps of: receiving a two-dimensional image; including a plurality of pixels, wherein the two dimensional image has (or has been processed to have) a transparent background; processing at least one of colour or greyscale pixel values of the two-dimensional image to generate a digital representation of a three-dimensional shape for defining at least a part of the food product, wherein the processing includes applying shaping parameters for the food product to generate the digital representation of the three-dimensional shape; and generating a file comprising the digital representation of a three-dimensional shape for defining said at least a part of the food product.

Providing shaping parameters for a food product enables automated customisation of the shape of the food product based on an image so that limitations of the material of the food product are to be taken into account, for example to ensure reliable forming of the food product in a mould and reliable release of the food product from the mould and/or to ensure that the product will hold its shape once formed by moulding and/or sculpturing.

The processing of at least one of colour or greyscale pixel values of the digital two-dimensional image can comprise quantising said at least one of colour or greyscale pixel values to generate quantised pixel values and mapping the quantised pixel values to height values and applying the shaping parameters to generate the digital representation of the three-dimensional shape. Using quantised values enables more efficient processing and better allows for optimisation of the customisations based on the food product to be manufactured.

In different examples, the three-dimensional shape can correspond to the food product, a part of the food product, a mould for the food product, a part of a mould for the food product, a negative of a mould for forming a mould for the food product, or a negative of a part of a mould for forming a mould for the food product.

The shaping parameters for a food product can include one or more of a range of mappings between quantised pixel values and height values, a curvature at a transition between height values, or a curvature of an edge within a height value. The shaping parameters can be held in storage and can be specific to a food product and recipe for a food product.

Outputting the digital representation can comprise outputting a file in a format for controlling a three-dimensional manufacturing apparatus. Examples of three-dimensional manufacturing apparatus (also known as digital manufacturing device(s)), can include, for example, an additive and/or subtractive manufacturing device for generating a three-dimensional object (or article). Suitable additive manufacturing devices comprise, for example, a three-dimensional printer in which a three-dimensional object is built up by curing or melting successive solid layers from a liquid or powder substrate. Suitable subtractive manufacturing devices comprise, for example, computer-controlled cutting, milling and/or routing machines where blade(s), saws, router(s) and/or laser(s) may remove material from a solid block to create a three-dimensional object. Thus, unless the context clearly indicates differently it will be understood that any reference herein to three-dimensional printers or three-dimensional printing methods could in alternative embodiments be replaced by a suitable other additive or subtractive means of generating a three-dimensional object.

A method of forming a mould for a food product can include the aforementioned computer-implemented method for defining a three-dimensional shape for a food product and can further include: inputting the digital representation of the three-dimensional shape for defining said at least a part of the food product to a three-dimensional manufacturing apparatus; causing the three-dimensional manufacturing apparatus to use the digital representation of the three-dimensional shape for defining said at least a part of the food product to form a three-dimensional object that is one of: a mould, or a part of a mould, for the food product; or a negative of a mould, or a negative of part of a mould, for forming a mould for the food product.

In one example, where the three-dimensional object is the part of the mould for the food product, the three-dimensional object can be combined with a blank for the mould to form the mould, or where the three-dimensional object is the negative of part of the mould, the three-dimensional object can be combined with a blank for the negative of the mould to form the negative of the mould. In this manner a mould or a negative of a mould can be formed with less material needing to be processed by the three-dimensional manufacturing apparatus, thereby reducing cost and the time for forming the mould or the negative of the mould.

An example mould or negative of a mould formed by an example method of forming a mould can comprise food-grade material. An example method can also include forming a mould comprising food-grade material from a negative of the mould, for example by using reduced pressure (vacuum forming) and/or heat (thermo forming).

In one example, a method of manufacturing a food product can include using a mould formed by the aforementioned methods.

In one example, the food product is a chocolate-based food product, the method comprising moulding the chocolate-based food product using the mould. An example of a chocolate-based moulded product suitable for production in accordance with the claimed subject matter is the specific shape and size of the four or two-fingered chocolate coated laminated wafer bar available commercially from Nestlé under the registered trade mark KitKat^{®}
In another example the food product is a gummy, the method comprising moulding a gummy using the mould.

In another example a method of manufacturing a food product can include the aforementioned computer-implemented method for defining a three-dimensional shape for a food product and can further include: inputting the digital representation of the three-dimensional shape for defining said at least a part of the food product to a three-dimensional manufacturing apparatus and causing the three-dimensional manufacturing apparatus to use the digital representation of the three-dimensional shape to form a food product from material for the food product. In this example the three-dimensional manufacturing apparatus can be used to directly manufacture the food product by an additive and/or subtractive manufacturing process.

A method of manufacturing a food product can further comprise packaging the food product.

Another aspect of the claimed subject-matter includes apparatus comprising means for carrying out such a method. A further aspect of the claimed subject matter includes the use of such an apparatus to manufacture a food product.

Another aspect of the claimed subject-matter includes a computer program product comprising program code that, when executed by one or more processors, carries out a method for defining a mould for a food product.

### BRIEF DESCRIPTION OF THE DRAWINGS

Example embodiments are described hereinafter, by way of example only, with reference to the accompanying schematic drawings, which are not to scale and in which:
Figure 1 is a schematic representation of an example of a networked system for performing part of an example process for manufacturing a customised food product;
Figure 2 is a schematic representation of software modules in storage of a host system of the system of Figure 1;
Figure 3 illustrates an example process for manufacturing a customised food product;
Figure 4 illustrates part of the process of Figure 3 for generating a three-dimensional file from a two-dimensional image;
Figure 5 illustrates part of the process of Figure 3 for generating a mould for manufacturing a food product;
Figure 6 illustrates an example set of files used during the process of Figure 3;
Figure 7 illustrates an example process for manufacturing gummies;
Figures 8A and 8B form a schematic representation of a mould for manufacturing a gummy and a negative of a mould for manufacturing a gummy;
Figure 9 is an overview of an example process for manufacturing a chocolate-based product;
Figures 10A, 10B and 10C form a schematic representation of a first example of a mould for manufacturing a chocolate-based product;
Figures 11A, 11B and 11C form a schematic representation of a first example of a negative of a mould for manufacturing a chocolate-based product, and Figure 11D illustrates manufacturing a mould based on the mould negative;
Figures 12A, 12B and 12C form a schematic representation of a second example of a mould for manufacturing a chocolate-based product;
Figures 13A, 13B and 13C form a schematic representation of a second example of a negative of a mould for manufacturing a chocolate-based product, and Figure 13D illustrates manufacturing a mould based on the mould negative;
Figures 14A and 14B form a schematic representation of a third example of a mould for manufacturing a chocolate-based product.

### DETAILED DESCRIPTION

There are described example methods and apparatus for manufacturing customised food products.

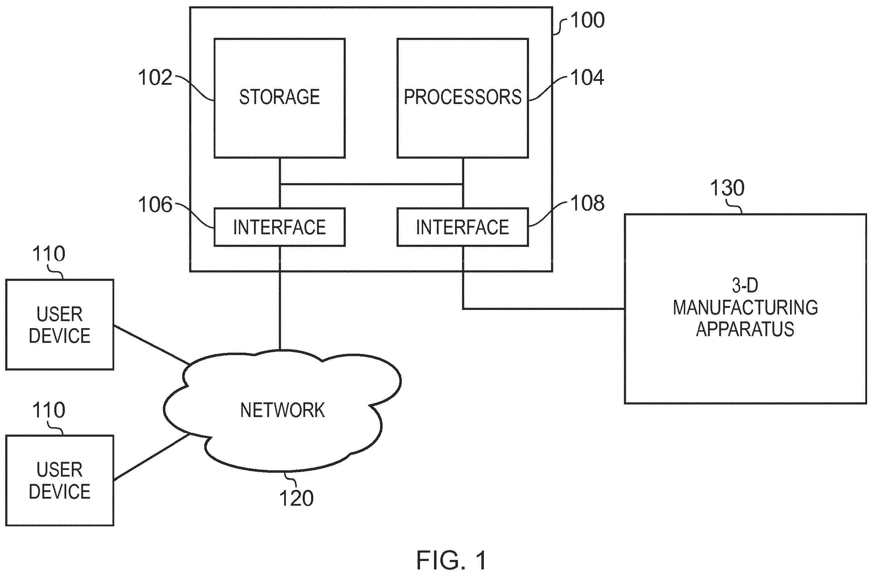

Figure 1 is a schematic representation of an example of a networked system for performing part of an example process for manufacturing a customised food product. Figure 1 illustrates a host system 100 that comprises one or more computer systems including host storage 102, one or more host processors 104, and one or more interfaces 106 and 108 for interfacing the host system to external systems. The host system can also include conventional input and output devices such as a keyboard and mouse, and one or more displays (not shown). In the example shown in Figure 1, interface 106 provides an external interface via an external network 120, for example the Internet, to one or more user devices 110. Although only two user devices 110 are shown in Figure 1, it will be appreciated that many user devices can connect via the network 120 and the interface 106 to the host system 100. The user may, for example, be an employee of a food manufacturer, or may, for example, be a customer of, for example, a food manufacturer. Interface 108 connects the host system to a three-dimensional manufacturing apparatus 130. The three-dimensional manufacturing apparatus 130 (also known as digital manufacturing device(s)), can include, for example, an additive and/or subtractive manufacturing device for generating a three-dimensional object (or article).

The three-dimensional manufacturing apparatus 130 can take various forms according to a specific implementation. Suitable additive manufacturing devices comprise, for example, a three-dimensional printer in which a three-dimensional object is built up by curing or melting successive solid layers from a liquid or powder substrate. For example, the three-dimensional manufacturing apparatus 130 can be a three-dimensional printer, configured to use conventional three-dimensional printing materials. Such a three-dimensional printer can be designed specifically for use with food-grade plastics materials. Suitable subtractive manufacturing devices comprise, for example, computer-controlled cutting, milling and/or routing machines where blade(s), saws, router(s) and/or laser(s) may remove material from a solid block to create a three-dimensional object.

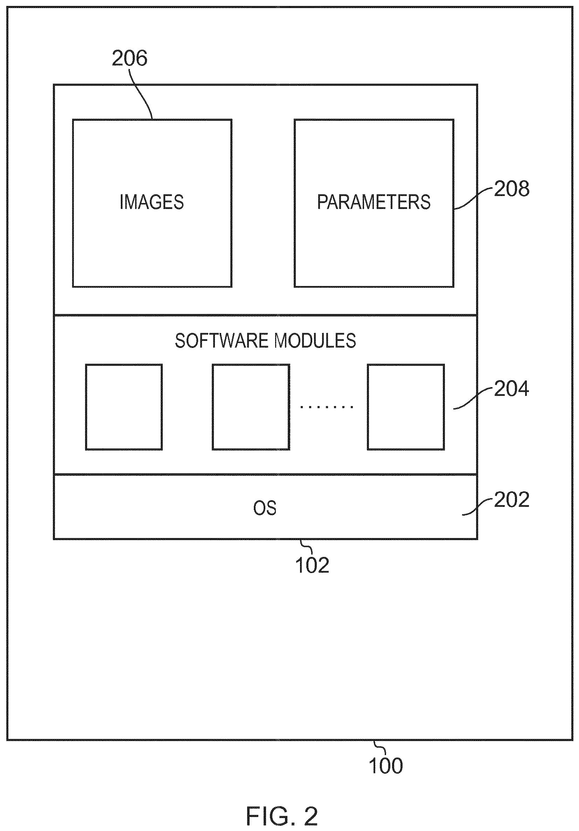

Figure 2 illustrates example modules held in the storage 102 of the host system 100. The modules include an operating system 202, software modules (computer programs) 204 for performing image processing and interfacing with external systems, image storage 206 for storing the various images and three-dimensional representations, and parameter storage 208 for storing parameters 209 relating to individual products types to be manufactured. The parameters 209 in the parameter storage include shaping parameters for a food product so that limitations of the material of the food product can be taken into account by the software modules 204, for example to ensure reliable forming of the food product in a mould and reliable release of the food product from the mould and/or to ensure that the product will hold its shape once formed by moulding and/or sculpturing.

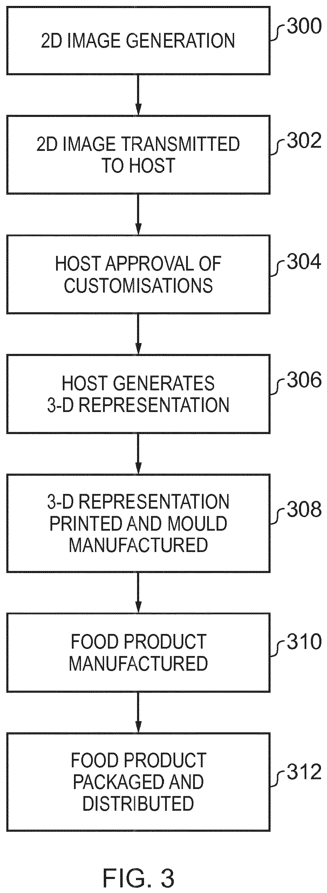

Figure 3 illustrates an example process for manufacturing a customised food product.

In step 300, a user is provided with an interface for specifying a two-dimensional image to be used to form a customised food product. The interface can, for example, be in the form of a website, or an application ("app") for use on a computer or mobile communications device such as a smartphone or tablet. The user can, for example, be a customer, or can be an employee of a food manufacturing company.

The user interface can be configured to give one or more options to a user for generating a customised food product.

In one example, a separate website or application can be provided for each food product for which customisation is possible. Alternatively a website or application can support customisation of multiple food products and can additionally allow a user to select a particular one of the supported food products to be customised.

For the, or each, food product for which customisation is possible, the website or application is configured to provide one or more options for customising the food product. One example of such a food product can be a gummy and another example of such a food product can be chocolate-based product, for example a KitKat^{®}.

For example, the user interface can provide a user with two-dimensional images from a pre-determined selection and/or arrange for images to be configured or built up from pre-selected (and vetted) modular components from which the user can create a desired two-dimensional image.

In one option, the user interface can provide a menu or set of input screens from which the user can create a representation of a face. This can include, for example, different menu selections or successive screens where the shape of a face can be selected, a hair style and/or facial hair can be selected, a mouth and/or nose shape can be selected, a style of eyewear can be selected, and so on. A result of selecting the successive facial characteristics can be the generation of a two-dimensional image of the face.

In another option, the user interface can provide the user with a set of a number of standard two-dimensional pop art images in colour and/or greyscale from which the user can make a selection.

In another option, the user interface can provide a text box into which the user can enter text for customising the food product, for example for selecting a name or a greeting. The user interface can be operable to create a two-dimensional image incorporating the selected text.

Another option can allow a user to source a two-dimensional image in other ways than explicitly described above, for example from an Internet search.

The user interface can be configured to provide a two-dimensional or three-dimensional representation of the food product identifying where the customisation is possible (e.g., for the whole product, a complete surface of a product, or one or more parts of a surface of the product). The user interface can be configured to update the two-dimensional or three-dimensional representation of the food product as the user customises the food product, to provide feedback to the user as to the effect of the customisations.

The result of the customisation process conducted by the user interface is a digital file (digital document or digital record) comprising a two-dimensional image of the intended customisations. The two-dimensional image can define individual pixels of the image in colour and/or greyscale values. The two-dimensional image can take various forms according to the options selected. This could be the two-dimensional pop-art image selected by a user, a two-dimensional image of a customised surface of the food product, or part of a customised surface of the food product. The digital file can also include, for example, text selected by the user (e.g., using ASCII or another coding) and a designation of the font and size of the text.

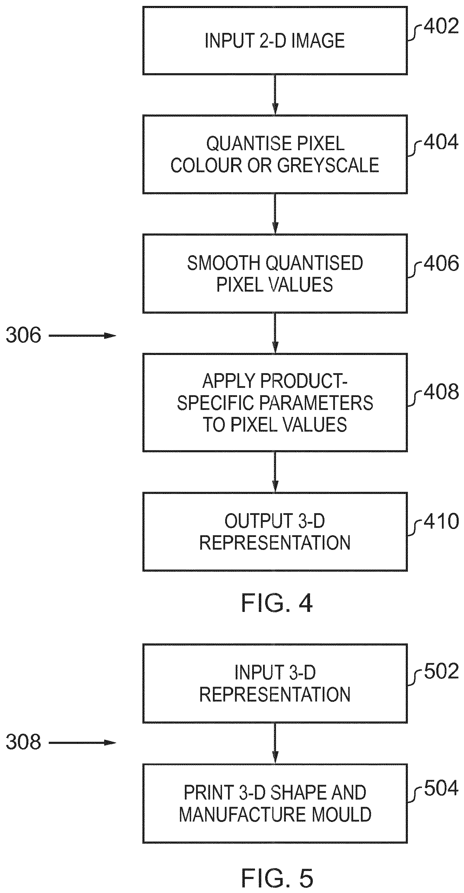

The website or application can use any standard two-dimensional image generation software to generate the two-dimensional image. The two-dimensional image can be in colour or in greyscale (monochrome). With reference to Figure 1, it is to be noted that the user can specify the two-dimensional image on a user device 110, which is connected via the network 120 (for example the Internet), to the host system 100. After specifying the two-dimensional image via the user device 110, the website or the app can be operable to send one or more messages containing the two-dimensional image of the digital file to the host system 100 in step 302 of Figure 3. The coding of the two dimensional image can take various forms, examples of which are discussed later with reference to the description of Figure 4.

In step 304 of Figure 3, the host system 100 can be operable to analyse the customisations proposed by the user. In particular, the host system can comprise one or more software modules that are operable to analyse the customisations proposed by the user by providing image analysis including, for example, text recognition, to determine whether the customisations are acceptable. For example, text contained within the two-dimensional image of the digital file can be compared to stored words or phrases that cannot be accepted. For example, if the text is determined to contain a profanity, then the text can be rejected by the host system and a user can be provided with a message rejecting the proposed text. Where the website or app provides the actual text selected by the user in addition to the two-dimensional image, this can be used to check that the text is acceptable. Graphical image analysis can be performed automatically to determine whether the images proposed by the user include representations that would be unacceptable for any given reason. The examples of text and/or image representations that cannot be accepted can be stored within the parameters storage 208 of the host system 100 and used by the one or more software modules for analysing the information provided by the website or app. If desired, the automatic processes performed by the software modules can be augmented by manual intervention for approving the customisations before proceeding to manufacture.

If the customisations are deemed acceptable, then in step 306, the host system is operable to generate a digital file (digital document or digital record) comprising a three-dimensional representation for defining a three-dimensional shape for the food product or for part thereof. The three-dimensional representation is generated by the host from the two-dimensional image provided in the message(s) from the website or the app of the user device 110. The host system 100 uses one or more software modules held in the software module storage 204, in combination with parameter information held in parameter storage 208, to control the one or more host processors 104 of the host system 100 for generating the three-dimensional representation.

Figure 4 illustrates in more detail an example implementation of step 306 in which the host is operable to generate one or more digital files comprising the three-dimensional digital representation.

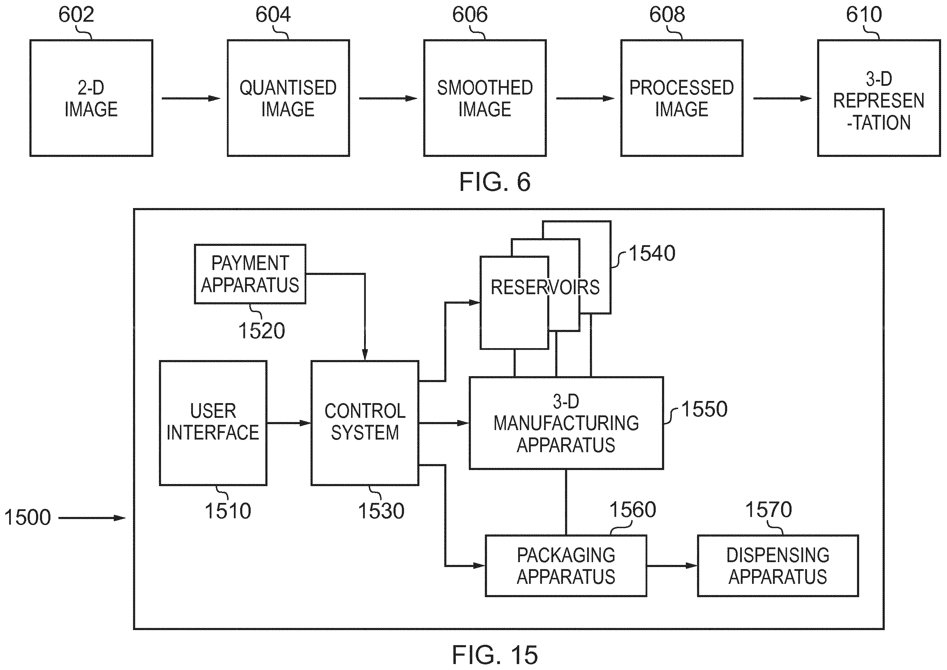

In step 402, the two-dimensional image is input to the host system and is stored in host storage as a first file 602 (see Figure 6). As mentioned earlier, the two-dimensional image can be in the form of a colour image and/or a greyscale image. A colour image will typically include pixels of very many different colours (e.g., several thousand colour values), optionally with additional saturation (greyscale) values. Similarly, a greyscale image (monochrome image) will typically include the pixels with very many greyscale values (e.g., several hundred greyscale values).

In the example process illustrated in Figure 4, in step 404, the two-dimensional image is processed to reduce the number of different pixel values to reduce the digital depth of the pixels. For example, the several thousand colours in a colour image can be reduced to a lower number of digital values. Similarly, in a greyscale image, the number of greyscale values can be reduced from several hundred greyscale values to a lower number of digital values.

In one example, the number of digital values used may be reduced to at least one value, usefully at least two values, more usefully at least three values and yet more usefully four values.

In another example, the number of digital values used may be reduced to no more than 150 values, conveniently no more than 100 values, more conveniently no more than 40 values, yet more conveniently no more than 30 values, even more conveniently no more than 20 values and for example no more than 16 values.

In a further example, the number of digital values used may be reduced to a number from 1 to 150, advantageously from 1 to 100, more advantageously from 2 to 40, yet more advantageously from 3 to 30, even more advantageously from 4 to 20, and for example from 4 to 16 values.

In practice the limiting factors for the number of digital values used is determined at the upper limit by the maximum height of the food product and the size of smallest feature that can be resolved in the material from which the food product is made and at the lower limit by the fidelity that is desired in the image that is to be reproduced. Illustrative examples of these factors are described later.

In the following, for illustrative purposes only, it is assumed that the number of values selected is eight digital values (hereafter referred to as eight quantised values), representative of eight colours/greyscale values. Although eight is indicated here as an example of a number of digital values to which the colours or greyscale values are reduced, as indicated above, in other examples another number of colours or greyscale values can be selected.

Various digital depth reduction techniques can be used to reduce the number of colours or greyscale values. For example, a thresholding technique can be used.

For example, an original image comprises 256 greyscale values (i.e. the two-dimensional image allows 256 different greyscale values from white to black to be specified) and it is desired to reduce the number of greyscale values to eight digital values, a range of values 0-255 can be split into eight equal or unequal ranges. For example, if equal ranges are selected, they can be the ranges 0-31, 32-63, 64-95, 96-127, 128-159, 160-191, 192-223, and 224-255.

The greyscale value (0-255) of each pixel of the two-dimensional image can then be compared to the ranges and, depending on the range within which it falls, can be set to a quantised pixel value of 0-7 for each of the eight ranges, depending on the range within which the individual greyscale value falls. The technical effect of this is to reduce, or quantise, the total number of values for pixels across the two-dimensional image. In the present example the number of values a pixel may have is reduced from 256 greyscale values to 8 quantised values. As mentioned, the number of eight quantised values is selected for illustrative purposes. Reducing the number of values can not only make processing more efficient, but also takes account of the limited height resolution of the intended food product, facilitating customisation of the food product.

It will also be appreciated that a similar approach can be taken for reducing the number of pixel values of a two-dimensional colour image. However, it should be noted with regard to a colour image that although it is possible to categorise the heights based on their greyscale value, this would provide anomalous results where for example an element (pixel or segment) of image is made of same intensity of colour as in terms of greyscale these heights would then be the same. In such a case colour values can be used rather than greyscale values to separate elements. In other words, for a colour image the analysis as described above as conducted on the basis of greyscale values is instead conducted on the basis of colour values, whereby quantised values are assigned based on ranges of colour values rather than assigning a quantised value based solely on ranges of greyscale values. In one illustrative example, in the case where an image comprises at least in part saturated primary colours (e.g. red value of 255 and also green value of 255), if this image is converted using greyscale (intensity) values, the quantised values would be the same and the saturated areas of different colours could not be distinguished.

One or more of three colour components that define the overall colour in a colour space cube (such RGB (red / green / blue); or CMY (cyan / magenta / yellow)) can be used separately to categorise the heights and assign a digital value based on one, two or three of the separate colour components. Other colour space systems can also be used to define colour and assign quantised digital values based on the different colour components of such other colour spaces.

An example of one such colour space uses hue, saturation, and lightness (HSL) to define colour. In HSL colour space disks of defined constant lightness (L) are defined having variations of both hue (varying by radical angle) and saturation (varying in intensity at distance from the centre). Thus hue and saturation are defined by polar co-ordinates within a disc of given lightness value, denoted by R/Θ (where R represents saturation and is a line of length R from the centre of the disk, the line being oriented at an angle of Θ (Theta) degrees from zero and corresponding to the hue). Thus in one alternative, a given colour within an image could be assigned digital values based on the values of H for hue given by Θ, S for saturation (given by R), and L for lightness given by the value of the specific colour disk from which the colour was selected.

In an example embodiment, RGB colour coordinates are used for defining colour as this has the advantages of being simple to use and a conventional method by which colour is measured in digital display equipment.

As a result of the processing in step 404, a file comprising a quantised image 604 (see Figure 6) is generated that comprises quantised pixel values based on the pixel colour and/or greyscale values of the two-dimensional image 602.

As will be explained later, the quantised pixel values (based on the pixel colour and/or greyscale values) are mapped to height values in accordance with parameters held in parameter storage 208 (see Figure 2). The height parameters used for the mapping between the quantised pixel values to height values can be determined according to the product type to be manufactured. For example, the range of height parameter values can differ between gummy manufacture and chocolate product manufacture. The mapping between the quantised pixel values and the height values that are stored can be predetermined by the food product manufacturer, and can vary for each food product based on the food product and recipe for the food product as will be described later. Thus, the quantised values of individual the pixels in the quantised image can be equated to height values based on the height parameter mapping held in the parameter storage 208 for the food product in question.

As a result of individual differences between adjacent pixels, the quantised image held in the parameter storage 208 can lead to individual pixels falling into different ranges, particularly for individual pixel values close to the boundary (threshold) value between greyscale or colour value ranges.

Accordingly, in step 406, the quantised values of an individual pixel (e.g., a pixel at a location (i,j)) can be compared to the quantised values of the eight immediately adjacent pixels (e.g., the pixels at positions (i-1,j-1) (i,j-1) (i+1,j-1) (i-1,j) (i+1,j) (i-1,j+1) (i,j+1) (i+1,j+1)) and where a given number, for example a majority (say 5 or more), of the eight immediately adjacent pixels have the same quantised value and where this is different from that of the single pixel (i,j), the quantised value of the individual pixel at the location (i,j) can be changed to the quantised value of those immediately adjacent pixels. A similar approach can be used based on blocks of pixels, e.g., 2x2 blocks of pixels. This operation can be performed in one or more passes, for example based on increasing sizes of blocks of pixels. This approach can be used to "smooth" the resulting quantised image to produce a smoothed quantized image 606.

In the example process shown in Figure 4, in step 408, a further processing step is performed on the smoothed quantised image 606 to apply further parameters based on the food product to be manufactured.

For example, in the case of the manufacture of gummies, in order to achieve efficient removal of the starch powder after curing of the gummy, it is desirable that the edges of the mould have a minimum curvature to reduce the possibility of starch being trapped in sharp concave corners. Accordingly, in an example of step 408 for manufacturing customised gummies, an edge radius rule is applied between height values over the whole image with respect to edges within the three-dimensional representation. In order to do this, values of individual pixels and of blocks of pixels can be compared to values of adjacent pixels and blocks of pixels to identify edges between pixel values and to smooth edges to avoid transitions that are too sharp or steep.

By way of a simplified example, consider a situation where one pixel at a location (i,j) has a quantised value of 6 and adjacent pixels at locations (i-1,j-1) (i,j-1) and (i+1,j-1) (i-1,j) and (i+1,j+1)also have a value of 6, but pixels at locations (i-1,j+1) (i,j+1) (i+1,j+1) have a quantized value of 4, it may be determined that the line of pixels (i-1,j), (i,j) and (i+1,j+1) represents an edge. In order to smooth the edge, the values of pixels (i-1,j), (i,j) and (i+1,j+1) could be changed to a value of 5 to smooth the edge. It will be apparent to a person skilled in the art how this approach can be extended to produce smoothed edges that have a predetermined maximum or minimum curvature. The parameters to control this process can be stored in the parameter storage 208 for a given product type and product recipe. A similar approach can be taken for other product types. The parameters can vary dependent on the product type and product recipe. The parameters can be integer values or floating point values, integer values having the advantage that they use less memory.

By way of a further example of the process applied in step 408, in the case of the manufacturer of moulds for chocolate-based products, relative adjacent heights are chosen in order that chocolate may flow within a mould to all of the extremities of the mould. Parameters can also be stored that define the sharpness of corners within a given quantisation value of the smoothed image so that during manufacture, it can be ensured that chocolate flows into the corners and undesired bubbles are avoided. The smoothing of corners can also be achieved using comparisons between pixels and pixel blocks at transitions between quantisation levels in a manner similar to the approach regarding the smoothing of edges as described above.

The quantised pixel values of the smoothed quantised image 606 following step 408 are equated to height values in accordance with parameters held in parameter storage 208 in Figure 2. The height parameters used for the mapping between the pixel value and the height values are determined according to the product type to be manufactured. For example, the range of height parameter values can differ between gummy manufacture and chocolate product manufacture. The mapping between the quantised pixel values and the height values that are stored can be predetermined by the food product manufacturer, and can vary for each food product based on the food product and recipe for the food product. In the processing described with respect to steps 404, 406 and 408, these height mappings are taken into account in the setting of the other parameters used. For example, depending on the product type, in step 404 it may be determined for a given product and product recipe that allows greater differentiation of heights, more quantisation levels may be chosen, and for a given product and product recipe that allows a lower differentiation of heights, fewer quantisation levels may be chosen.

For example, for a chocolate product where 8 quantisation ranges are used, a difference between adjacent heights of, for example, between 0.05 mm and 0.2 mm, for example 0.1 mm, can be selected according to a product type, size and product recipe to be manufactured. For example, for a gummy product where 8 quantisation ranges are used, a difference between adjacent heights of, for example, between 0.1 mm and 2.0 mm, for example 1.0 mm can be selected according to a product type, size and product recipe to be manufactured. The differences in adjacent height values for the shape may be the same or different.

A typical gummy may have a height of approximately 1.5 cm and it is impractical to resolve features in the starch mould typically used to produce gummies that are smaller than about 0.1 mm (100 microns in size). This gives a realistic practical upper limit of 150 to the number of quantisation levels (quantised digital values) that could be used to produce a typical gummy. In practice, the number of quantised digital values used to create a gummy can be less than 150 as for most shapes lower values are more than sufficient to resolve the detail in a gummy that would be visually acceptable to the consumer. Three-dimensional products created from a very large number of digital values are more expensive and complex to produce and do not lead to dramatically improved fidelity in the appearance of the final food product.

For a chocolate product such as a tablet, coated product, enrobed product and/or count line product, a typical height may be about 1 cm (e.g. the moulded chocolate wafer bar sold under the registered trade mark KitKat^{®} has a typical height of approx. 9.9 mm) . The smallest resolution realistic in the chocolate coating is about 0.05 mm (50 microns) to give a realistic practical upper limit of about 40 to the number of quantised digital values to be used to produce a typical chocolate product of these types. In practice, the number of quantised digital values is typically no more than 40 (and often much less) for low height chocolate products such as KitKat^{®} but might usefully be more where the chocolate product is tall or large (e.g. a chocolate Easter egg).

In step 410, an output file for a three dimensional representation of a shape can be generated. In this step, the mapping between the quantised pixel values and the height values stored in the parameter storage 208 for the product to be manufactured are used to convert the quantised pixel values to three dimensional height values of the three dimensional representation of the shape. The output file can be generated in a standard three-dimensional format, for example an STL (STereoLithografy) format. Alternatively, a proprietary or other file format can be used.

Returning to Figure 3, in step 308, the output file containing the three-dimensional representation can be input to a three-dimensional manufacturing apparatus for generating a three-dimensional object having the shape represented by the three-dimensional representation.

In one example, the three-dimensional manufacturing apparatus 120 (see, for example, Figure 1) is a conventional three-dimensional printer. The three-dimensional printer is operable to print in food-grade materials, at least for implementations where this is required, for example, by food regulations as discussed later.

Figure 5 illustrates the steps 502 of inputting the output file containing the three-dimensional representation and the step 504 of printing a three-dimensional shape for forming or for use in forming moulds for manufacturing the food product. Step 504 illustrated in Figure 3 can comprise various alternative embodiments depending on the material used in the three-dimensional printer and also the food products to be manufactured, as will be explained in further detail below.

Returning to Figure 3, in step 310, the food product is manufactured using the appropriate food manufacturing technique as will be described later.

In step 320, the food product is packaged and distributed. For example, in the case that the user is a customer, a food product can be packaged and distributed to the customer. Alternatively, if the user is an employee of the food manufacturing company, then the manufactured product can enter the normal distribution network.

The parameter storage 208 (Figure 2) stores parameters for each of the product types and recipes supported by the host system 100. The parameters are used by the software modules 204 to process two-dimensional images to provide the three-dimensional representations for generating moulds suitable for the respective product types.

Example parameters, for a given product type and recipe can include one or more of:
a) a number of quantisation ranges for reducing the colour or greyscale depth (e.g., 8 in the example described above);
b) threshold values for the quantisation ranges (e.g., 0-31, 32-63, 64-95, 96-127, 128-159, 160-191, 192-223, 224-255 in the example described above);
c) a mapping between a quantisation range and a height value (e.g., where 8 quantisation levels are used, 1 quantisation level equals, for example, 0.125mm for an example chocolate product and recipe, or, for example, 0.2mm for an example gummy product and recipe);
d) an overall mould height (e.g., 10mm for an example chocolate product and recipe, or, 16mm for an example gummy product and recipe);
e) a minimum edge radius value between heights (which can also be defined by a minimum angle between adjacent surfaces to ensure release of the product from the mould e.g. for an example gummy product made from a powder starch mould, a preferred release angle is no less than 5°, for a chocolate product made from a rigid or semi flexible mould a preferred release angle is 10 to 30°, more preferably from 15 to 25°, even more preferably from 18 to 22° and for example about 20°;
f) a minimum corner radius within a height.

Other optional parameters can include one or more additional parameters.

For a three dimensional food product where the shape is generated substantially completely from a two-dimensional image as described herein, the two dimensional image advantageously has (or has been processed to have) a transparent background. Transparent backgrounds introduce fewer artefacts and less noise in the image which after operation of the process of the invention results in a sharper three dimensional shape with good definition and less fuzziness. A background with a single RGB colour value (or narrow range of RGB values) such that there is a tolerance for cutting out a contour shape can also be used.

Often image backgrounds, which to the human eye seemingly comprise a single colour (including white) background, consist of pixels having a wide variety of different RGB values within a broad range, despite such backgrounds being indistinguishable to the naked eye in a display device (e.g. computer screen), Processing an image to remove such an imprecise background can be challenging, for example resulting in a cut-out shape with an imprecise, fuzzy outline and/or containing holes or cut-outs from the interior of the image. This may lead to issues when generating a three-dimensional product as described herein, Accordingly, for products such as gummies where their shape is largely defined by the two-dimensional image it is advantageous if the background is transparent.

As described later, example methods may also be used to generate some food products such as certain chocolate products where a two-dimensional image is used to provide three-dimensional texture to the surface of an existing product shape. Thus the two-dimensional image is not used to form the complete mould shape but only the surface or part thereof. For example a moulded chocolate product such as a bar, tablet or count line typically has an underlying product shape which is pre-defined and forms part of the product identity (and may even be protected by designs and/or trademarks). In such a case the overall product shape is broadly constrained within certain boundaries and then a two-dimensional image is used to add three-dimensional features and texture to decorate to the surface of the predefined shape, The background colour of the two-dimensional image is less critical where the image is used to cover the whole of part of a product surface. For other chocolate products prepared as three-dimensional shapes that are generated substantially from the two-dimensional image the same considerations as for a gummy apply and a use of a two-dimensional image with a transparent background is advantageous.

The host system can include one or more configuration software modules that enable the operator of the host system to set and modify parameters to allow different food products and/or recipes to be supported. The configuration software module or modules can provide the operator with a user interface that allows parameters to be entered and/or adjusted, and/or to simulate the effect of changes to the parameters.

In one example, inputs can be generated on line e.g. by a customer at home or using a mobile app and/or in a store by a customer using dedicated self service device and/or via inputs mediated by a trained operator such as a shop assistant and/or confectioner. The system may be used to generate an order (optionally pre-checked for suitability as discussed above) that is sent to a device to create a three dimensional mould or part thereof (or negative or positive of the same) which is either produced on a bespoke basis (locally to the customer and/or at a remote location) so a confectioner can hand-make product using the bespoke moulds and/or the moulds could be generated automatically for use in an industrial process on a conventional factory production line. The product could be made to order and delivered to the customer e.g. by post or later collection or be made in store for immediate purchase.

An example implementation can also be in the form of an automated vending machine in which the product is produced from an image and the moulds are created entirely within the machine.

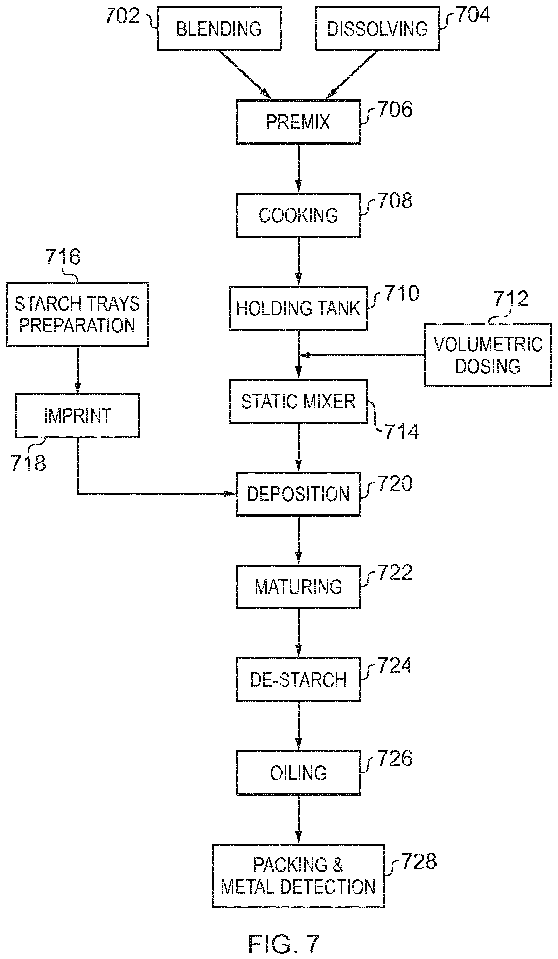

Figure 7 illustrates an example of a gummy manufacturing process. Steps 702 and 704 represent, respectively, steps of blending sugar and glucose, and of dissolving gelatine in water, for use in the process of Figure 7.

Step 706 describes pre-mixing the blended sugar and glucose mixture with the dissolved gelatine and heating the mixture at 70⁰C. The mixture is then cooked in step 708 to generate unflavoured liquor that is held in a holding tank at step 710 at 90°C. At step 712, volumetric dosing is performed using colour, flavour and acid to provide a desired colour, flavour and texture for the gummy. Step 714 represents a static mixer for the resulting mixture.

Step 716 represents the preparation of starch trays. In a gummy manufacturing process, the moulds are generated in powdered cornstarch. Step 716 comprises filling trays with conditioned starch. Powdered starch is a preferred powdered material for use to create gummy moulds as it is cheap, reusable, and suitable for contact with food products and has additional useful properties such as drawing moisture from the gummy liquor during setting. The starch may be selected from: rice starch, wheat starch, corn starch and/or mixtures thereof; corn starch being preferred.

In step 718, positive moulds corresponding to the shape of the individual gummies are imprinted into the starch trays, to generate "negatives" (i.e., negative mould shapes) for the gummies. In step 720, the mixture produced at step 714 is deposited into the imprinted negatives in the starch trays.

In step 722, the gummies are then matured in the starch trays for a period (e.g., for 1-5 days) depending on the recipe used. In step 724, the gummies are taken out of the starch. At step 726, gummies are mixed with vegetable oils to remove any excess starch and to provide a shiny finish. At step 728, the resulting gummies are packaged and during the packaging process metal detection occurs for any foreign presence in the gummies.

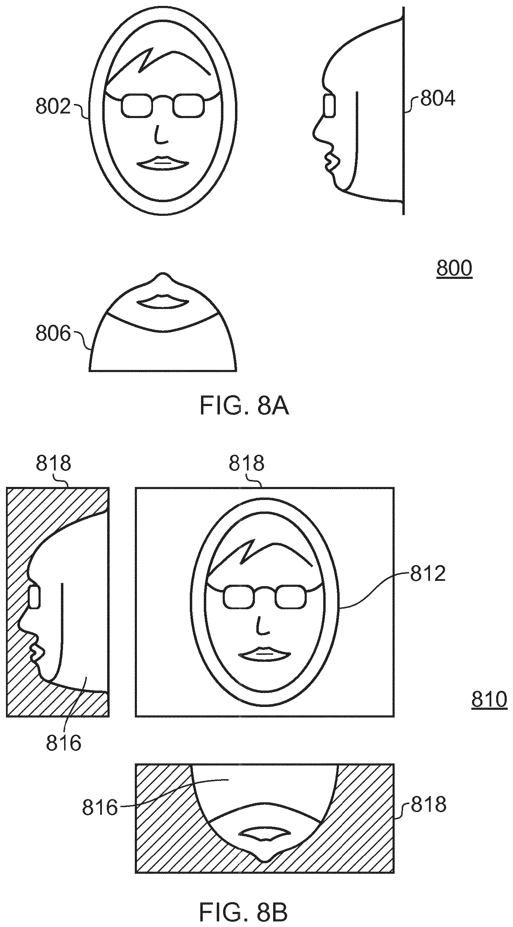

Figure 8A is a schematic representation of a positive mould 800 for a gummy including a top view 802, a side view 804 and end view 806. The positive mould 800 for the gummy can be manufactured by three-dimensional printing using the three-dimensional printer. If the positive mould 800 is printed using a food-grade plastics material, the positive mould 800 can be used directly during the manufacturing of gummies. In this case, the positive mould 800 will be attached, with other suitable positive moulds, to a plate (not shown), which is used to press against the upper surface of a starch tray to provide negative moulds in the upper surface of the starch tray for receiving the material used during gummy manufacture. The positive mould 800 can be attached to the plate in any appropriate, conventional manner, for example using food-grade adhesives.

Figure 8B is a schematic representation of a negative mould 810 for use in manufacturing a gummy, including a top view 812, a side view 814, and an end view 816. As can be seen in Figure 8B, the negative mould forms a recess within material 818, printed using a three-dimensional printer. The negative mould 810 can then be used to create multiple copies of a positive mould (not shown) corresponding in shape to the positive mould 800 Figure 8A, but manufactured, for example, using a food-grade plaster material. The plaster positive mould can then be attached with other suitable positive moulds, to a plate (not shown), which is used to press against the upper surface of the starch tray to provide negative moulds in the upper surface of the starch tray for receiving the material used during gummy manufacture. The positive plaster mould can be attached to the plate in any appropriate, conventional manner, for example using food-grade adhesives.

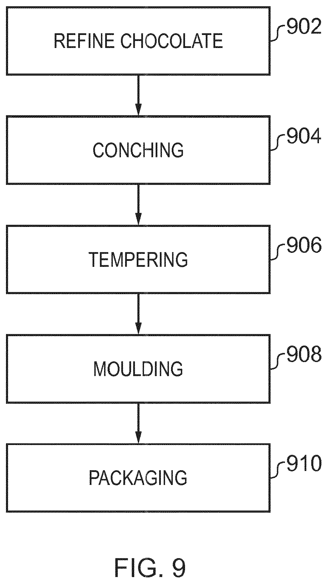

Figure 9 provides a summary of a process for making a chocolate-based product. Milk chocolate typically comprises four basic ingredients, namely cocoa paste, cocoa butter, sugar and milk. The mixture depends on the type of chocolate being produced. The example process illustrated in Figure 9 comprises steps of:
902 - refining the chocolate to reduce the size of the particles;
904 - conching (stirring) to produce a smooth and glossy chocolate;
906 - tempering (heating at a defined temperature, for example 45°C) to produce an even, smooth end product;
908 - moulding the chocolate into shape;
910 - packaging the product.

Other conventional steps known to a person skilled in the art of making chocolate products may also be used to produce the chocolate products by a method as described herein.

A mould (or parts thereof) used for manufacturing food products may be formed from a master shape (e.g., a negative of the mould) made by a process as described herein. Such a mould formed from a master shape may be formed using any suitable mould making method known to those skilled in the art. For example the mould may be prepared from a sheet or web of a mould material suitable for contact with food (such as a food-grade polymer, e.g. polyester, silicone and/or polycarbonate). The sheet may be moulded to conform to the master shape by any suitable method such as by reduced pressure (vacuum forming) and/or heat (thermo forming). Other mould methods such as casting using lost wax, sand casting or injection moulding of molten mould material (metal or plastic) may also be used to create moulds.

A mould may be formed from one or more three-dimensional elements, which elements (also referred to as mould inserts) may be held within a large mould shape (are also referred to herein as mould blanks). A mould insert may be permanently or releasability held with the mould banks. If the mould insert is releasably held, this facilitates cleaning of the moulds and reuse of the mould blanks with different mould inserts. Advantageously, the means by which the mould inserts are held to the mould (holding means) are compatible with high speed industrial production. Thus there should be few elements, advantageously no elements, that might break and fall into the product (such a clips, screws or nails). Using holding means other than glues or adhesives avoids the risk that these might migrate or leak into the food product. To meet these considerations, holding means can be provided in the form of a simple mechanical means such interlocking elements between the mould insert and mould blank, that for example form an interlocking and/or snap fit. By providing holding means that create a good seal between the mould insert and mould blank, it can be avoided that leakage of food product occurs and/or it can be substantially avoided that a seam and/or join line appears on the surface of the food product.

The mould (and mould inserts and mould blank) which will be in direct contact with any foodstuff consist of materials which are food-grade. If the mould is a negative or positive intermediate mould for creation of the final mould which is used to create the moulded food product, such intermediate moulds may or may not consist of food-grade materials, but if they do not a further step may be required. For example depending on local legislation such (non-food-grade) intermediate moulds may need to be washed, sterilised or otherwise treated before use and there may be restrictions on how and where such non-food-grade intermediate moulds may be handled or used within a food production area. Therefore, in many implementations, it is advantageous to use food-grade material to prepare the intermediate moulds,
As used herein, the expression "food-grade" when referring to a material herein denotes that the material is permitted to be in contact with foodstuffs suitable for human consumption as defined under the relevant local legislation (also referred to herein as "suitable for food contact"). At the date of filing the present application in the European Union the relevant rules for materials that are suitable for food contact include the EU regulation 1935/2004, entitled "Framework Regulation on materials and articles intended to come into contact with food" and EU regulation 2023/2006, entitled "Good Manufacturing Practice for materials and articles intended to come in contact with food". Also relevant are EU Regulations: 10/2011 on food contact with plastic materials (as amended by 2015/174, 202/2014, 1183/2012, 1183/2012, 1282/2011, 321/2011, 284/2011); 450/2009 on food contact with active and intelligent materials; 282/2008 on food contact with recycled plastic materials; 42/2007/42 on food contact with regenerated cellulose film; 1895/2005 on restrictions of food contact with certain epoxy materials; and EU Directives 500/1984 on national law of food contact with ceramic articles; and 11/1993 on release of N-nitrosamines and N-nitrosatable substances. Thus as used herein "food-grade material" denotes that said material is compliant with the aforementioned EU rules on suitability for food contact and preferably such food-grade materials will also those materials that will continue to be compliant with any updated rules and lists of materials issued under these and/or related EU Regulations or Directives.

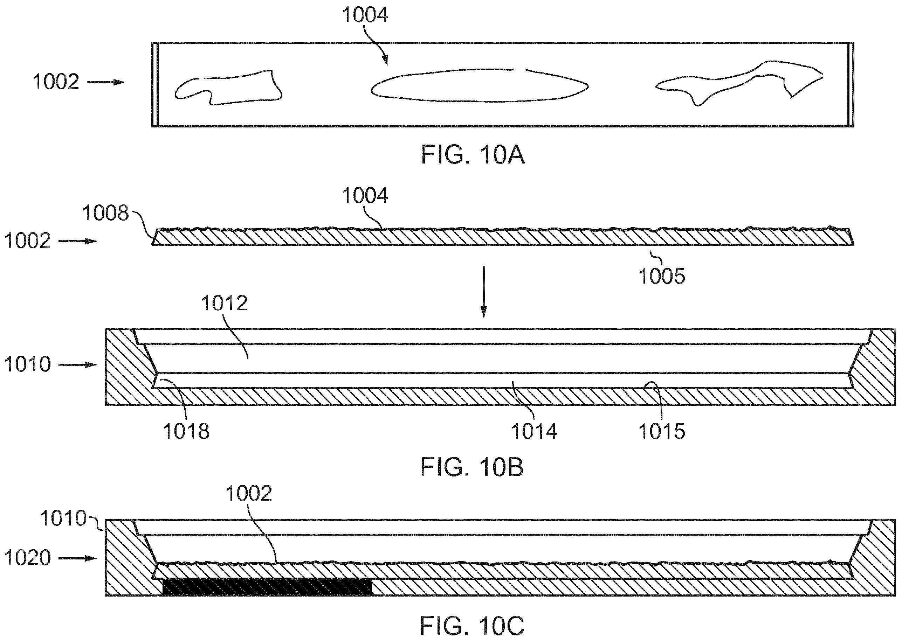

Figure 10, formed of Figures 10A, 10B and 10C, is a schematic representation of one example for creating a mould 1020 for use in the manufacture of a chocolate-based product. In Figure 10, a mould 1020 is created using a customised insert 1002 for insertion in a blank mould 1010.

As shown in Figure 10A, a customised insert 1002 can be printed based on a three-dimensional representation of part of a mould wherein the customised surface detail (in negative) for the mould is generated on a top surface 1004 of the customised insert 1002. In the example of Figure 10, the mould 1020 is a "negative" of the shape of the food product. In other words, the shape and patterning of the mould and the customised surface provide a shape for receiving chocolate for the chocolate-based product within the mould, whereby the resulting chocolate-based product has the desired shape for the product and the customised surface therefor.

Figure 10B represents a cross-sectional side view of the blank mould 1010 and the customised insert 1002 prior to insertion in the blank mould 1010. In the example shown in Figure 10, the customised insert 1002 has an outer edge shaped to form a keying surface 1008 between the upper customised surface 1004 and a flat lower surface 1005 of the customised insert 1002. As represented in Figure 10B, the customised insert is inserted into the blank mould 1010, which provides a negative of the basic form for the chocolate product, but has a recess 1014 for receiving the customised insert 1002. The lower surface of the recess 1014 has a flat surface for receiving the flat surface of the customised insert and has peripheral portions 1018 configured to key with the keying surface 1008 of the customised insert 1002. The customised insert 1002 is manufactured by three-dimensional printing of a plastics material that provides a degree of resilience to enable the customised insert 1002 to be snapped into place in the recess 1014 of the blank mould 1010.

Figure 10C illustrates a cross-sectional side view of the assembled mould 1020 including the blank mould 1010 and the customised insert 1002. A benefit of manufacturing the mould 1020 from the two component parts is that less material is used in printing the customised insert 1002 than would be necessary if the complete mould 1020 were printed using a three-dimensional printer. This means that the blank mould 1010 can be manufactured using a conventional moulding technique at lower cost and the printing of the customised surface 1004 can be achieved at a significantly reduced cost and more quickly than would be the case if the complete mould 1020 were to be three-dimensionally printed using the three-dimensional printer. The customised insert 1002 can be printed with high accuracy so that a good seal is formed between the keying surfaces 1008 and 1018 of the customised insert 1002 and the blank mould 1010, respectively. If the blank mould is manufactured from a food-grade plastics material, and the customised insert 1002 is three-dimensionally printed from a food-grade plastics material, the resulting mould 1020 can then be used directly during the manufacture of the chocolate product. Also, using the approach illustrated in Figure 10, multiple moulds for multiple customised products can be generated by having a blank mould 1010 which allows for multiple customised inserts 1002 to be inserted at respective locations for respective chocolate products or parts of chocolate products. As the mould 1020 forms a negative of the food product, the process described in Figure 10 directly can form a mould.

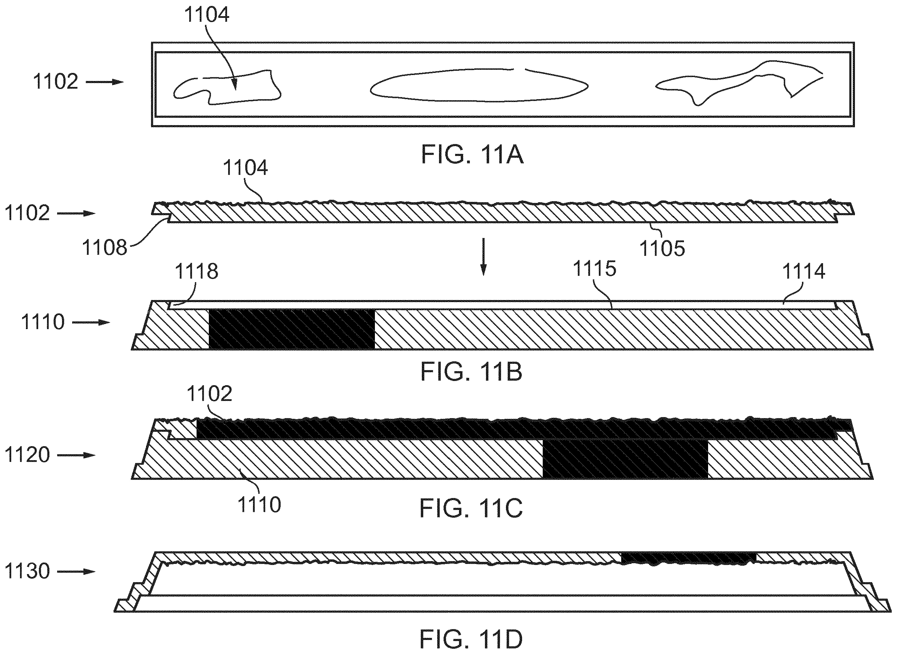

Figure 11, formed of Figures 11A, 11B, 11C and 11D, is a schematic representation of one example for creating a negative 1120 of a mould for use in the manufacture of a chocolate-based product. In Figure 11, the negative 1120 of the mould is created using a customised insert 1102 for insertion in a blank mould negative 1110.

As shown in Figure 11A, a customised insert 1102 can be printed based on a three-dimensional representation of part of a mould negative, wherein the customised surface detail for the mould is generated on a top surface 1104 of the customised insert 1102. Although Figure 11 relates to the generation of a mould negative 1120, this means that the shape and patterning of the negative of the mould blank 1120 and its customised surface 1104 have the same shape and patterning as the desired chocolate-based product when produced from a mould.

Figure 11B represents a cross-sectional side view of the blank mould negative 1110 and the customised insert 1102 prior to insertion in the blank mould negative 1110. In the example shown in Figure 11, the customised insert 1102 has an outer edge 1108 shaped to form a keying surface 1108 below the upper customised surface 1104. The customised insert 1102 has a flat lower surface 1105. As represented in Figure 11B, the customised insert 1102 is inserted into the blank mould negative 1110 which provides the basic form for the chocolate product, but has a recess 1114 for receiving the customised insert 1102. The lower surface of the recess 1014 has a flat surface 1115 for receiving the flat surface of the customised insert 1102 and has peripheral portions 1118 configured to key with the keying surface 1108 of the customised insert 1102. The customised insert 1102 is manufactured by three-dimensional printing of a plastics material that provides a degree of resilience to enable the customised insert 1102 to be snapped into place in the recess 1114 of blank mould negative 1110.

Figure 11C illustrates a cross-sectional side view of the assembled mould negative 1120 including the blank mould negative 1110 and the customised insert 1102. A benefit of manufacturing the mould negative 1120 from the two component parts is that less material is used in printing the customised surface 1104 than would be necessary if the complete mould negative were printed using a three-dimensional printer. This means that the blank mould negative 1110 can be manufactured using a conventional moulding technique at lower cost and the printing of the customised surface 1104 can be achieved at a significantly reduced cost and more quickly than would be the case if the complete mould negative were to be three-dimensionally printed using a three-dimensional printer. The customised insert 1102 can be printed with high accuracy so that a good seal is formed between the keying surfaces 1108 and 1118 of the customised insert 1102 and the blank mould negative 1110, respectively.

In the example shown in Figure 11, neither the blank mould negative 1110, nor the customised insert, needs to be made from a food-grade plastics material as the mould negative 1120 is not used for directly forming the food product. Instead, the mould negative 1120 is used instead to form a mould 1130 (shown in a cross-sectional side view in Figure 11D), for example by vacuum-forming using a food-grade plastics material, such as, for example, polypropylene or polyethylene terephthalate, or another food-grade vacuum-formable plastics material. Although the example of Figure 11 includes an additional manufacturing step compared to the example of Figure 10, this approach may be cost-effective in some implementations as three-dimensional printers for food-grade plastics materials can be more expensive than three dimensional printers for other plastics materials.

Multiple moulds for multiple customised products can be generated by having a common blank mould negative 1110 which allows for multiple customised inserts 1102 to be inserted at respective locations for respective chocolate products or parts of chocolate products.

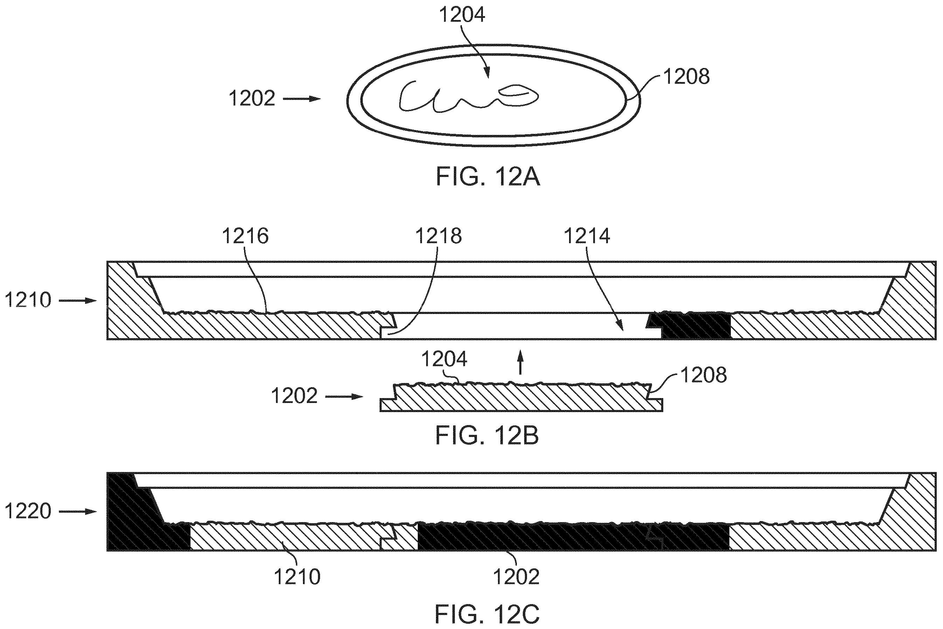

Figure 12, formed of Figures 12A, 12B and 12C, is a schematic representation of another example for creating a mould 1220 for use in the manufacture of a chocolate-based product. In Figure 12, a mould 1220 is created using a customised insert 1202 for insertion in a blank mould 1210.

As shown in Figure 12, a customised insert 1202 can be printed based on a three-dimensional representation part of a mould, where the customised surface detail for the mould is generated on a top surface 1204 of a customised insert 1202. A difference between the examples of Figure 12 and Figure 10 is that the customised insert 1202 only represents part of the customised surface of the food product. In the example illustrated in Figure 12, an oval insert 1202 is provided for insertion at a central region of a surface of the negative mould. Also, in the example shown in Figure 12, the insert 1202 is in turn inserted through a bottom surface of a blank mould 1210.

Figure 12B represents a cross-sectional side view of the blank mould 1210 and the customised insert 1202 prior to insertion into the blank mould 1210. In the example shown in Figure 12, the customised insert 1202 has an outer edge 1208 shaped to form a keying surface 1208 for snapping into place with a correspondingly configured keying surface 1218 in an opening in the blank mould 1210. In the example shown in Figure 12, a surface 1216 of the negative mould can comprise standard patterning to be formed within the surface of the chocolate-based product. In the examples shown in Figure 12, the customisable surface 1204 is limited to the oval portion of the customised insert 1202.

Figure 12C shows a cross-sectional side view of the assembled mould 1220 including the blank mould 1210 and the customised insert 1202. An advantage of the example shown in Figure 12 compared to the example shown in Figure 10 is that even less material needs to be printed by a three-dimensional printer. The blank mould 1210 can be manufactured using a conventional moulding technique at lower cost and the printing of the customised surface 1204 can be achieved at a significantly reduced cost and more quickly than would be the case if the complete mould 1220 were to be three-dimensionally printed using a three-dimensional printer. The customised insert 1202 can be printed with high accuracy so that a good seal is formed between the keying surfaces 1208 and 1218 of the customised insert 1202 and the blank mould 1210, respectively. If the blank mould 1220 is manufactured from a food-grade plastics material, and the customised insert 1202 is three-dimensionally printed from a food-grade plastics material, the resulting mould 1220 can then be used directly during the manufacture of the chocolate product. Multiple moulds for multiple customised products can be generated by having a blank mould 1210 which allows for multiple customised inserts 1202 to be inserted at respective locations for respective chocolate products or parts of chocolate products.

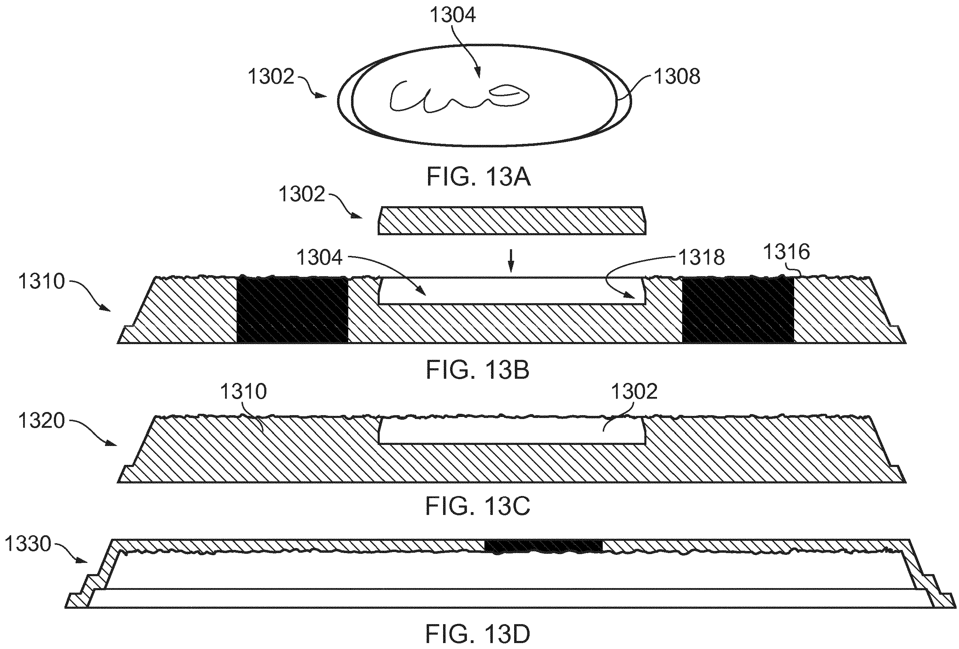

Figure 13, formed of Figures 13A, 13B, 13C and 13D, is a schematic representation of another example for creating a negative 1320 for a mould for use in the manufacture of a chocolate-based product. Figure 13A illustrates a customised insert 1302, Figure 13B is a cross-sectional side view of the customised insert 1302 and the blank mould negative 1310, and Figure 13C represents a cross-sectional side view of the assembled mould negative 1320 comprising the customised insert 1302 and the blank mould negative 1310. The example of Figure 13 corresponds generally to the mould negative 1120 of Figure 11. However, in the example of Figure 13, the customised surface 1304 only forms part of an upper surface 1316 of the mould 1320. Thus, the customised insert 1302 in Figure 13 represents a part of a patterned surface of the chocolate-based product to be manufactured, in the present case an oval portion at the centre of the patterned surface. A blank mould negative 1310 has a pattern surface 1316 with a recess 1314 formed in a central portion thereof. Recess 1314 is configured to receive the customised insert 1302 and is provided with keying surfaces 1318 around the periphery thereof for keying with corresponding keying surfaces 1308 of the customised insert 1302. Figure 13C illustrates the assembled mould negative 1320 comprising the customised insert 1302 inserted in the recess 1314 of the blank mould negative 1310.

As for the example shown in Figure 11, neither the blank mould negative 1310, nor the customised insert 1302 of Figure 13 needs to be made from a food-grade plastics material, as the assembled mould negative 1320 is not used directly for forming a food product. Instead, the mould negative 1320 is used instead for vacuum forming a mould 1330 (shown in a cross-sectional side view in Figure 13D) using a food-grade plastics material, such as, for example, polypropylene or polyethylene terephthalate, or another food-grade vacuum formable plastics material. Although the example of Figure 13 includes an additional manufacturing step compared to the example of Figure 12, this approach may be cost-effective in some implementations as three-dimensional printers for food-grade plastics materials can be more expensive than three dimensional printers for other plastics materials.

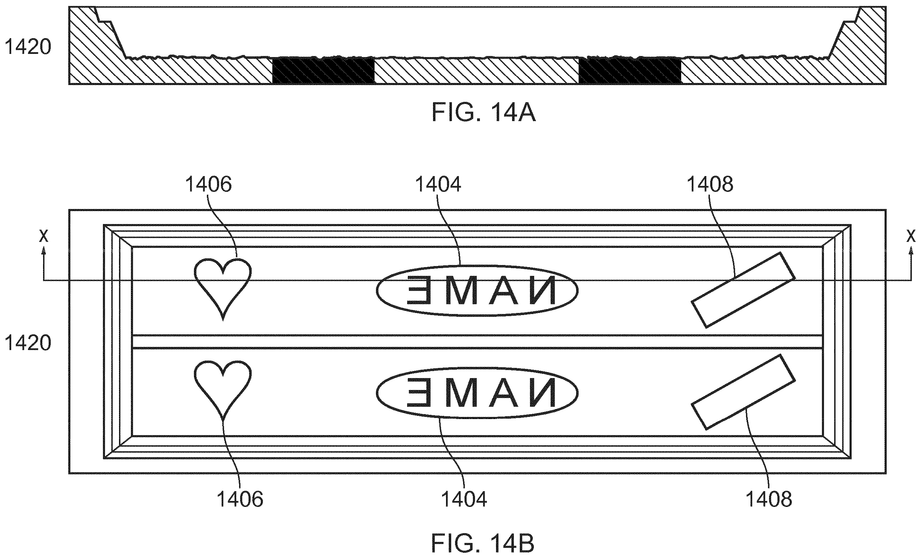

Figure 14, formed of Figures 14A and 14B, forms a schematic representation of an alternative mould that can be produced by an example embodiment. Figure 14A is a cross sectional side view through the mould along the line XX shown in Figure 14B, which is a top view of the mould. In the example of Figure 14, a complete mould is directly formed by three-dimensional printing. As shown in Figure 14, the mould 1420 forms a mould for a chocolate-based product comprising two linked bars wherein each of the bars has a surface with customised profiling thereon. In the example shown, the customised surface includes a name 1404 in a central region of each of the bars, one or more graphic items (for example a heart shape) in a first region 1406 and a product logo represented by a diagonal rectangle in another region 1408. As discussed above, directly printing a complete mould can take more time and more material than the approaches described in Figures 10 to 14. However, in some examples this may be advantageous, particularly where a three-dimensional printer is available which can directly print in a food-grade material, such as, for example, a food-grade silicon material.

Various changes and/or changes may be made to the examples described above.

For example, with reference to the examples described in Figures 10 to 14, as mentioned earlier it is to be understood, that where reference is made to the use of three-dimensional printing and three dimensional printers, a three-dimensional manufacturing apparatus employing other additive and/or subtractive means could also be used to generate a mould other than through the use of a three-dimensional printer.

Also, although it is described that in step 304 of the process described with reference to Figure 3, that the host system 100 can be operable to analyse the customisations proposed by the user, possibly with manual intervention for approving the customisations before proceeding to manufacture, in another embodiment an optional step of human or computational check of the suitability of the image could occur at another stage in the process between the interface and the device that creates the three-dimensional object. It should be understood that such a check can be performed not for technical issues relating to the production of the product but rather to assess the appropriateness of a proposed image to be used. For example images may need to be assessed to ensure that they are free of third party intellectual property and/or that relevant licences have been obtained. Images may need to be checked for their suitability from a moral or ethical point of view, so the image is not obscene, illegal, immoral, inappropriate and/or otherwise is consistent with the specific brand values of the food product being prepared and/or corporate values of the brand owner. Such checks can be done manually and/or by a computer applying pre-determined criteria and/or by adaptive learning systems (e.g. using neural networks). If a computational check for suitability is performed it is possible that the system can be entirely automated from selection of the two-dimensional image to the industrial production of the final food product. It is also possible that the two-dimensional image is selected by the user from a pre-screened library of images approved for suitability and/or assembled by the user from a pre-screened library of image components approved for suitability that can be assembled by the user to create the 2D image. In such cases a checking step may not be needed.

In examples described above, the manufacture of a customised food product can be achieved by defining a three-dimensional shape for food product manufacture based on a two-dimensional image and using a three-dimensional manufacturing apparatus to form a customised part or whole of a mould for the food product or a negative of part of all of a mould for forming a customised mould for the food product, and then using such a customised mould to manufacture the food product.

However, as also explained above, it is also envisaged that in an alternative example the manufacture of a customised food product can be achieved by defining a three-dimensional shape for food product manufacture based on a two-dimensional image and using a three-dimensional manufacturing apparatus to manufacture the food product directly. In such a case, a digital representation of the three-dimensional shape for defining at least a part of the food product can be input to a three-dimensional manufacturing apparatus, which can then be caused to use the digital representation of the three-dimensional shape to form a food product from material for the food product, for example using an additive of subtractive process.

In one such alternative example, a customised food product, for example a chocolate food product, having a basic or standard shape for the food product, can be formed from food material in the basic or standard shape, for example by a subtractive process. The subtractive process can be implemented using a three-dimensional manufacturing apparatus that comprises one or more of, for example, computer-controlled cutting, milling and/or routing machines including blade(s), saws, router(s) and/or laser(s). The three-dimensional manufacturing apparatus can be controlled using the digital representation of the three-dimensional shape to selectively remove food material from the basic or standard shape to directly form the customised food product.

In another such alternative example, a food product, for example a chocolate food product, having a basic or standard shape for the food product, can be formed from food material in the basic or standard shape, for example by an additive process. The additive process can be implemented using a three-dimensional manufacturing apparatus operable to selectively cure or melt successive layers from a liquid or powder food material to directly form the customised food product. The three-dimensional manufacturing apparatus can be controlled using the digital representation of the three-dimensional shape to selectively add the food material to the basic or standard shape to directly form the customised food product.

In a further such alternative example, a food product, for example a chocolate food product, the food product, can be formed, for example, by an additive process by means of which food material is selectively laid down using a three-dimensional manufacturing apparatus operable to selectively cure or melt successive layers from a liquid or powder food material to directly form the customised food product.

Such alternative process as described above can be suitable for use in a vending machine, whereby the food material for the food product can be provided in the vending machine and then formed into a customised food product in response to a user selecting a two dimensional representation for customizing or forming a food product. However, such alternative processes are not limited to use in a vending machine.

Figure 15 is a schematic representation of one example of a vending machine employing a three-dimensional manufacturing apparatus in the form, for example, of three-dimensional printer operable to directly manufacture a food product.

Figure 15 illustrates a vending machine 1500 which comprises a user interface 1510, a payment sub-system 1520, a control system 1530, one or more reservoirs 1540 of one or more of liquid, solid or powder food material, a three-dimensional manufacturing apparatus 1550, for example a three-dimensional printer, a packaging apparatus 1560 for packaging a resultant food product and a dispensing apparatus 1570 for dispensing the packaged food product. The user interface 1510 can be controlled by the control system 1530 to provide one or more of the options for selecting a two-dimensional image as described above. Payment for the food product can be effected using any conventional payment apparatus under the control, for example, of the control system, 1530. The control system 1530 can comprise one or more processors and storage, the storage comprising a configuration corresponding, for example, to that as shown in Figure 2. The control system can be configured to carry out the method described with reference to Figures 3, 4 and 6 and to control the three-dimensional manufacturing apparatus 1550 to build up the food product using the food material in the one or more reservoirs 1540 into a customised three-dimensional food product. The packaging apparatus 1560 can be operable to package, or wrap, the customised three-dimensional food product under the control of the control system 1530 and to dispense the customised and wrapped food product to the user using the dispensing apparatus 1570.

There have, therefore, been described methods, apparatus and systems for directly manufacturing a customised three-dimensional food product based on a two dimensional image.

There have also been described methods, apparatus and systems for manufacturing a mould for use in generating a customised, moulded, three-dimensional food product based on a two dimensional image.

An example mould or mould negative is envisaged that can include one or more of the following features:
1) An example mould or mould negative formed as a unitary mould or mould negative; or
2) An example mould or mould negative formed from a blank for a mould or mould negative that is combined with a customised insert to form a customised mould or mould negative;
For example,
2a) a blank for a mould or mould negative and the customised insert formed with corresponding features that engage with each other to form a customised mould or mould negative;
For example,
2ai) the corresponding features configured to preferably engage releasably with each other to enable re-use of the blank for the mould or mould negative and/or
2aii) the corresponding features configured to key with each other and/or to provide a snap fit with each other.

There have been described example methods of preparing a food product that include defining a three-dimensional shape for the food product by computer-implemented steps of: receiving a two-dimensional image; processing at least one of colour or greyscale pixel values of the two-dimensional image to generate a digital representation of a three-dimensional shape for defining at least a part of the food product, wherein the processing includes applying shaping parameters for the food product to generate the digital representation of the three-dimensional shape; and generating a file comprising the digital representation of a three-dimensional shape for defining said at least a part of the food product. The digital representation is used to control an additive and/or subtractive three-dimensional manufacturing apparatus as part of a process for forming the food product.

The described methods enable customisable food products to be formed in a cost-effective and flexible manner. The example methods and apparatus allow for the customisation of food products with a minimum of human intervention being needed. By predefining operating parameters in the described method and apparatus, a request for customisation of a food product by a user can use an image specified or input by a user to manufacture a food product with three-dimensional customisations without needing the customisations to be manually made or controlled by an operator in response to the request.

There has also been described example apparatus comprising means for carrying out such methods. Such an apparatus can be used to manufacture a food product. Various example embodiments of suitable apparatus have been described.

An example apparatus includes a computer system comprising at least one processor and storage, and one or more computer program products comprising instructions which, when executed by the processor(s) is operable to perform a method comprising: receiving a two-dimensional image; processing at least one of colour or greyscale pixel values of the two-dimensional image to generate a digital representation of a three-dimensional shape for defining at least a part of the food product, wherein the processing includes applying shaping parameters for the food product to generate the digital representation of the three-dimensional shape; and generating a file comprising the digital representation of a three-dimensional shape for defining said at least a part of the food product.

An example apparatus can further include a three-dimensional manufacturing apparatus operationally connected to the computer system, the three-dimensional manufacturing apparatus being configured, for example by one or more computer program products: to receive input of the digital representation of the three-dimensional shape for defining said at least a part of the food product to the three-dimensional manufacturing apparatus; and to cause the three-dimensional manufacturing apparatus to use the digital representation of the three-dimensional shape for defining said at least a part of the food product to form a three-dimensional object that is one of: a mould, or a part of a mould, for the food product; or a negative of a mould, or a negative of part of a mould, for forming a mould for the food product.

An example apparatus can further include an apparatus for manufacturing a food product using a said mould.

An example apparatus can also include a three-dimensional manufacturing apparatus operationally connected to the computer system, the three-dimensional manufacturing apparatus being configured, for example by one or more computer program products: to receive input of the digital representation of the three-dimensional shape for defining said at least a part of the food product to a three-dimensional manufacturing apparatus; and to cause the three-dimensional manufacturing apparatus to use the digital representation of the three-dimensional shape to sculpture a food product from material for the food product.

An example apparatus can also include means for packaging the food product.

An example apparatus can be a vending machine comprising such a computer system, three-dimensional manufacturing apparatus and means for packaging a food product
Example embodiments can provide a computer program product, the computer program product comprising program code that, when executed by one or more processors of the example apparatus, performs carries out a method for defining a mould for a food product, including at least the steps of: receiving a two-dimensional image; processing at least one of colour or greyscale pixel values of the two-dimensional image to generate a digital representation of a three-dimensional shape for defining at least a part of the food product, wherein the processing includes applying shaping parameters for the food product to generate the digital representation of the three-dimensional shape; and generating a file comprising the digital representation of a three-dimensional shape for defining said at least a part of the food product.

An example computer program product can comprise one or more computer program modules and/or instructions for controlling one or more processors. The computer program product can, for example, comprise a non-transient machine-readable storage medium storing the computer program instructions.

Although particular examples have been described, it will be appreciated that further examples can be envisaged within the scope of the claimed subject matter.

## Claims

1. A computer implemented method for defining a three-dimensional shape for a food product, the method comprising computer-implemented steps of:
receiving a two-dimensional image including a plurality of pixels, wherein the two dimensional image has, or has been processed to have, a transparent background;
processing at least one of colour or greyscale pixel values for the plurality of pixels of the two-dimensional image to generate a digital representation of a three-dimensional shape for defining at least a part of the food product, wherein the processing includes applying shaping parameters for the food product to generate the digital representation of the three-dimensional shape, wherein processing at least one of colour or greyscale pixel values of the digital two-dimensional image comprises:
quantising said at least one of colour or greyscale pixel values for the plurality of pixels to generate quantised pixel values, wherein a number of possible values for the quantised pixel values is smaller than a number of possible values for the colour or greyscale pixel values,
mapping the quantised pixel values to height values, and
applying the shaping parameters to generate the digital representation of the three-dimensional shape,
wherein applying the shaping parameters includes smoothing one or more edges or corners of the digital representation of the three-dimensional shape by adjusting a first height value at a first pixel, based on one or more second height values at one or more second pixels adjacent the first pixel;
generating a file comprising the digital representation of a three-dimensional shape defining said at least a part of the food product; and
wherein the shaping parameters for the food product comprises at least one of: a range of mappings between quantised pixel values and height values; a curvature at a transition between height values; a curvature of an edge within a height value.

2. The method of claim 1, wherein the three-dimensional shape corresponds to the shape of one of:
the food product;
a part of the food product;
a mould for the food product;
a part of a mould for the food product;
a negative of a mould for forming a mould for the food product; or
a negative of a part of a mould for forming a mould for the food product.

3. The method of any one of the preceding claims, wherein outputting the digital representation comprises outputting a file in a format for controlling a three-dimensional manufacturing apparatus.

4. A method of forming a mould for a food product, the method comprising the method of any one of the preceding claims and further comprising:
inputting the digital representation of the three-dimensional shape for defining said at least a part of the food product to a three-dimensional manufacturing apparatus;
causing the three-dimensional manufacturing apparatus to use the digital representation of the three-dimensional shape for defining said at least a part of the food product to form a three-dimensional object that is one of:
a mould, or a part of a mould, for the food product; or
a negative of a mould, or a negative of part of a mould, for forming a mould for the food product.

5. The method of claim 4, further comprising,
where the three-dimensional object is the part of the mould for the food product, combining the three-dimensional object with a blank for the mould to form the mould, or
where the three-dimensional object is the negative of part of the mould, combining the three-dimensional object with a blank for the negative of the mould to form the negative of the mould.

6. The method of claim 4 or claim 5, wherein
a said mould formed by the method of claim 4 or claim 5 comprises food-grade material, or
the method further comprises forming a mould comprising food-grade material from a said negative of the mould formed by the method of claim 4 or claim 5.

7. A method of manufacturing a food product, the method comprising using a said mould formed by the method of any one of claims 4 to 6.

8. The method of claim 7, wherein the mould formed by the method of any one of claims 4 to 6 is for one of:
manufacturing a chocolate food product, the method comprising moulding a chocolate-based food product using the mould;
manufacturing gummies, the method comprising moulding a gummy using the mould.

9. A method of manufacturing a food product, comprising the method of any one of claims 1 to 3 and further comprising:
inputting the digital representation of the three-dimensional shape for defining said at least a part of the food product to a three-dimensional manufacturing apparatus;
causing the three-dimensional manufacturing apparatus to use the digital representation of the three-dimensional shape to form a food product from material for the food product.

10. Apparatus comprising means for carrying out the method of any one of the preceding claims.

11. The use of the apparatus of claim 10 to manufacture a food product.

12. A computer program product comprising program code that, when executed by one or more processors, carries out the method of any one of claims 1 to 3.

## Patentansprüche

1. Computerimplementiertes Verfahren zum Definieren einer dreidimensionalen Form für ein Nahrungsmittelprodukt, wobei das Verfahren computerimplementierte Schritte umfasst von:
Empfangen eines zweidimensionalen Bildes, das eine Vielzahl von Pixeln einschließt, wobei das zweidimensionale Bild einen transparenten Hintergrund hat oder so verarbeitet wurde, dass es einen transparenten Hintergrund hat;
Verarbeiten von mindestens einem von Farb- oder Graustufen-Pixelwerten für die Vielzahl von Pixeln des zweidimensionalen Bildes, um eine digitale Darstellung einer dreidimensionalen Form zum Definieren mindestens eines Teils des Nahrungsmittelprodukts zu erzeugen, wobei die Verarbeitung das Anwenden von Formgebungsparametern für das Nahrungsmittelprodukt einschließt, um die digitale Darstellung der dreidimensionalen Form zu erzeugen, wobei das Verarbeiten von mindestens einem von Farb- oder Graustufen-Pixelwerten des digitalen zweidimensionalen Bildes umfasst:
Quantisieren der mindestens einen von Farb- oder Graustufen-Pixelwerten für die Vielzahl von Pixeln, um quantisierte Pixelwerte zu erzeugen, wobei eine Anzahl möglicher Werte für die quantisierten Pixelwerte kleiner ist als eine Anzahl möglicher Werte für die Farb- oder Graustufen-Pixelwerte,
Zuordnen der quantisierten Pixelwerte zu Höhenwerten, und
Anwenden der Formgebungsparameter zum Erzeugen der digitalen Darstellung der dreidimensionalen Form,
wobei das Anwenden der Formgebungsparameter das Glätten einer oder mehrerer Kanten oder Ecken der digitalen Darstellung der dreidimensionalen Form durch Anpassen eines ersten Höhenwerts an einem ersten Pixel basierend auf einem oder mehreren zweiten Höhenwerten an einem oder mehreren zweiten Pixeln benachbart zu dem ersten Pixel einschließt;
Erzeugen einer Datei, die die digitale Darstellung einer dreidimensionalen Form umfasst, welche den mindestens einen Teil des Nahrungsmittelprodukts definiert; und
wobei die Formgebungsparameter für das Nahrungsmittelprodukt mindestens eines umfassen von: einem Bereich von Zuordnungen zwischen quantisierten Pixelwerten und Höhenwerten; eine Krümmung an einem Übergang zwischen Höhenwerten; eine Krümmung einer Kante innerhalb eines Höhenwerts.

2. Verfahren nach Anspruch 1, wobei die dreidimensionale Form der Form von einem der Folgenden entspricht:
das Nahrungsmittelprodukt;
ein Teil des Nahrungsmittelprodukts;
eine Gießform für das Nahrungsmittelprodukt;
ein Teil einer Gießform für das Nahrungsmittelprodukt;
ein Negativ einer Gießform zum Bilden einer Gießform für das Nahrungsmittelprodukt; oder
ein Negativ eines Teils einer Gießform zum Bilden einer Gießform für das Nahrungsmittelprodukt.

3. Verfahren nach einem der vorstehenden Ansprüche, wobei das Ausgeben der digitalen Darstellung das Ausgeben einer Datei in einem Format zum Steuern einer dreidimensionalen Herstellungseinrichtung umfasst.

4. Verfahren zum Bilden einer Gießform für ein Nahrungsmittelprodukt, wobei das Verfahren das Verfahren nach einem der vorstehenden Ansprüche umfasst und ferner umfasst:
Eingeben der digitalen Darstellung der dreidimensionalen Form zum Definieren des mindestens einen Teils des Nahrungsmittelprodukts in eine dreidimensionale Herstellungseinrichtung;
wodurch die dreidimensionale Herstellungseinrichtung veranlasst wird, die digitale Darstellung der dreidimensionalen Form zur Definition des mindestens einen Teils des Nahrungsmittelprodukts zu verwenden, um ein dreidimensionales Objekt zu bilden, das eines der Folgenden ist:
eine Gießform oder ein Teil einer Gießform für das Nahrungsmittelprodukt; oder
ein Negativ einer Gießform oder ein Negativ eines Teils einer Gießform zum Bilden einer Gießform für das Nahrungsmittelprodukt.

5. Verfahren nach Anspruch 4, ferner umfassend,
wobei das dreidimensionale Objekt der Teil der Gießform für das Nahrungsmittelprodukt ist, Kombinieren des dreidimensionalen Objekts mit einem Rohling für die Gießform zum Bilden der Gießform, oder
wobei das dreidimensionale Objekt das Negativ eines Teils der Gießform ist, wobei das dreidimensionale Objekt mit einem Rohling für das Negativ der Gießform kombiniert wird, um das Negativ der Gießform zu bilden.

6. Verfahren nach Anspruch 4 oder 5, wobei
eine Gießform, die durch das Verfahren von Anspruch 4 oder 5 gebildet wird, lebensmittelgeeignetes Material umfasst, oder
das Verfahren ferner das Bilden einer Gießform umfasst, die lebensmittelgeeignetes Material umfasst, aus einem Negativ der Gießform, die durch das Verfahren nach Anspruch 4 oder 5 gebildet wird.

7. Verfahren zum Herstellen eines Nahrungsmittelprodukts, wobei das Verfahren die Verwendung die Gießform umfasst, die durch das Verfahren nach einem der Ansprüche 4 bis 6 gebildet wird.

8. Verfahren nach Anspruch 7, wobei die durch das Verfahren nach einem der Ansprüche 4 bis 6 gebildete Gießform für eines der Folgenden bestimmt ist:
Herstellen eines Schokoladennahrungsmittelprodukts, wobei das Verfahren das Formen eines schokoladenbasierten Nahrungsmittelprodukts unter Verwendung der Gießform umfasst;
Herstellen von Gummisüßware, wobei das Verfahren das Gießformen einer Gummisüßware unter Verwendung der Gießform umfasst.

9. Verfahren zum Herstellen eines Nahrungsmittelprodukts, umfassend das Verfahren nach einem der Ansprüche 1 bis 3 und ferner umfassend:
Eingeben der digitalen Darstellung der dreidimensionalen Form zum Definieren des mindestens einen Teils des Nahrungsmittelprodukts in eine dreidimensionale Herstellungseinrichtung;
wodurch die dreidimensionale Herstellungseinrichtung veranlasst wird, die digitale Darstellung der dreidimensionalen Form zu verwenden, um ein Nahrungsmittelprodukt aus Material für das Nahrungsmittelprodukt zu bilden.

10. Einrichtung, umfassend Mittel zum Durchführen des Verfahrens nach einem der vorstehenden Ansprüche.

11. Verwendung der Einrichtung nach Anspruch 10 zum Herstellen eines Nahrungsmittelprodukts.

12. Computerprogrammprodukt, das Programmcode umfasst, der, wenn er von einem oder mehreren Prozessoren ausgeführt wird, das Verfahren nach einem der Ansprüche 1 bis 3 durchführt.

## Revendications

1. Procédé mis en œuvre par ordinateur destiné à définir une forme tridimensionnelle d'un produit alimentaire, le procédé comprenant les étapes mises en œuvre par ordinateur consistant à :
recevoir une image bidimensionnelle comportant une pluralité de pixels, dans lequel l'image bidimensionnelle a, ou a été traitée pour avoir, un arrièreplan transparent ;
traiter au moins une des valeurs de pixels en couleur ou en niveaux de gris pour la pluralité de pixels de l'image bidimensionnelle afin de générer une représentation numérique d'une forme tridimensionnelle pour définir au moins une partie du produit alimentaire, dans lequel le traitement comporte l'application de paramètres de mise en forme pour le produit alimentaire afin de générer la représentation numérique de la forme tridimensionnelle, dans lequel le traitement d'au moins une des valeurs de pixels en couleur ou en niveaux de gris de l'image bidimensionnelle numérique comprend :
la quantification de ladite au moins une des valeurs de pixels en couleur ou en niveaux de gris pour la pluralité de pixels afin de générer des valeurs quantifiées de pixels, dans lequel un nombre de valeurs possibles pour les valeurs quantifiées de pixels est inférieur au nombre de valeurs possibles pour les valeurs de pixels en couleur ou en niveaux de gris,
la mise en correspondance des valeurs quantifiées de pixels avec les valeurs de hauteur, et
l'application des paramètres de mise en forme pour générer la représentation numérique de la forme tridimensionnelle,
dans lequel l'application des paramètres de mise en forme comporte le lissage d'un ou plusieurs bords ou coins de la représentation numérique de la forme tridimensionnelle en ajustant une première valeur de hauteur au niveau d'un premier pixel, sur la base d'une ou plusieurs secondes valeurs de hauteur au niveau d'un ou plusieurs seconds pixels adjacents au premier pixel ;
générer un fichier comprenant la représentation numérique d'une forme tridimensionnelle définissant ladite au moins une partie du produit alimentaire ; et
dans lequel les paramètres de mise en forme du produit alimentaire comprennent au moins l'une parmi : une gamme de mises en correspondance entre les valeurs quantifiées de pixels et les valeurs de hauteur ; une courbure à une transition entre les valeurs de hauteur ; une courbure d'un bord à l'intérieur d'une valeur de hauteur.

2. Procédé selon la revendication 1, dans lequel la forme tridimensionnelle correspond à la forme de l'un parmi :
le produit alimentaire ;
une partie du produit alimentaire ;
un moule pour le produit alimentaire ;
une partie d'un moule pour le produit alimentaire ;
une empreinte négative d'un moule pour former un moule pour le produit alimentaire ; ou
une empreinte négative d'une partie d'un moule pour former un moule pour le produit alimentaire.

3. Procédé selon l'une quelconque des revendications précédentes, dans lequel la délivrance en sortie de la représentation numérique comprend la délivrance en sortie d'un fichier dans un format permettant de commander un appareil de fabrication tridimensionnelle.

4. Procédé de formation d'un moule pour un produit alimentaire, le procédé comprenant le procédé selon l'une quelconque des revendications précédentes et comprenant en outre :
l'introduction de la représentation numérique de la forme tridimensionnelle pour définir ladite au moins une partie du produit alimentaire dans un appareil de fabrication tridimensionnelle ;
le fait d'amener l'appareil de fabrication tridimensionnelle à utiliser la représentation numérique de la forme tridimensionnelle pour définir ladite au moins une partie du produit alimentaire afin de former un objet tridimensionnel qui est l'un parmi :
un moule, ou une partie de moule, pour le produit alimentaire ; ou
une empreinte négative d'un moule, ou une empreinte négative d'une partie d'un moule, pour former un moule pour le produit alimentaire.

5. Procédé selon la revendication 4, comprenant en outre,
lorsque l'objet tridimensionnel est la partie du moule pour le produit alimentaire, la combinaison de l'objet tridimensionnel avec une ébauche de moule pour former le moule, ou
lorsque l'objet tridimensionnel est l'empreinte négative d'une partie du moule, la combinaison de l'objet tridimensionnel avec une ébauche de l'empreinte négative du moule pour former l'empreinte négative du moule.

6. Procédé selon la revendication 4 ou 5, dans lequel
un dit moule formé par le procédé selon la revendication 4 ou la revendication 5 comprend un matériau de qualité alimentaire, ou
le procédé comprend en outre la formation d'un moule comprenant un matériau de qualité alimentaire à partir d'une dite empreinte négative du moule formé par le procédé selon la revendication 4 ou la revendication 5.

7. Procédé de fabrication d'un produit alimentaire, le procédé comprenant l'utilisation d'un dit moule formé par le procédé selon l'une quelconque des revendications 4 à 6.

8. Procédé selon la revendication 7, dans lequel le moule formé par le procédé selon l'une quelconque des revendications 4 à 6 est pour l'une parmi :
la fabrication d'un produit alimentaire à base de chocolat, le procédé comprenant le moulage d'un produit alimentaire à base de chocolat à l'aide du moule ;
la fabrication de bonbons gélifiés, le procédé comprenant le moulage d'un bonbon gélifié à l'aide du moule.

9. Procédé de fabrication d'un produit alimentaire, comprenant le procédé selon l'une quelconque des revendications 1 à 3 et comprenant en outre :
l'introduction de la représentation numérique de la forme tridimensionnelle pour définir ladite au moins une partie du produit alimentaire dans un appareil de fabrication tridimensionnelle ;
le fait d'amener l'appareil de fabrication tridimensionnelle à utiliser la représentation numérique de la forme tridimensionnelle pour former un produit alimentaire à partir d'un matériau destiné au produit alimentaire.

10. Appareil comprenant des moyens destiné à réaliser le procédé selon l'une quelconque des revendications précédentes.

11. Utilisation de l'appareil selon la revendication 10 pour fabriquer un produit alimentaire.

12. Produit programme informatique comprenant un code programme qui, lorsqu'il est exécuté par un ou plusieurs processeurs, réalise le procédé selon l'une quelconque des revendications 1 à 3.
